# DEMANDE DE BREVET EUROPEEN

(11) **EP 1 714 700 A1**
(43) Date de publication de la demande: **25.10.2006**
(21) Numéro de dépôt: 06290475.0
(22) Date de dépôt: 23.03.2006
(51) Int. Cl.: B01L 3/00, B01F 13/00, B81B 1/00

(54) **Dispositif et procédé microfluidique de transfert de matière entre deux phases immiscibles**

(30) Priorité: 19.04.2005 FR 0503886
(71) Demandeur: Commissariat à l'Energie Atomique, 75752 Paris Cédex 16 (FR)
(72) Inventeur: Sarrut, Nicolas, 38170 Seyssinet-Pariset (FR); Jeanson, Hubert, 38410 Saint Martin d'Uriage (FR)
(74) Mandataire: Jacquard, Philippe Jean-Luc

(57) **Abrégé**

Procédé de transfert de matière d'au moins un soluté (S) entre une première phase liquide (P1) et une deuxième phase fluide (P2), immiscible avec la première, caractérisé en ce qu'il comporte le déplacement, dans un dispositif microfluidique et à l'aide de forces de nature électrique (électromouillage ou diélectrophorèse), d'au moins une gouttelette (G) de ladite première phase fluide (P1) à l'intérieur d'un espace (50) rempli par ladite deuxième phase fluide (P2).

De préférence, le déplacement de ladite gouttelette (G) à l'aide desdites forces de nature électrique est effectué le long d'une trajectoire (TG) entre un point d'injection (22) de ladite gouttelette (G) dans ledit dispositif microfluidique et une zone d'extraction et/ou d'analyse (30), ladite trajectoire (TG) étant déterminée de telle manière que ladite gouttelette (G) effectue un balayage d'une fraction significative dudit espace (50) rempli par ladite deuxième phase fluide (P2).

Le procédé peut comporter une étape de transfert de ladite gouttelette (G) à l'aide desdites forces de nature électrique vers un dispositif d'analyse chimique (30) intégré audit dispositif microfluidique et une étape d'analyse chimique de ladite gouttelette.

Dispositif pour la mise en oeuvre d'un tel procédé.

## Description

L'invention porte sur un procédé de transfert de matière entre deux phases immiscibles, et en particulier d'extraction liquide-fluide, principalement pour applications analytiques.

L'extraction liquide-fluide est une opération unitaire couramment utilisée en chimie industrielle et en chimie analytique, qui consiste à provoquer un transfert de matière d'au moins un soluté entre une première phase liquide et une deuxième phase fluide (liquide ou gazeuse) immiscible avec la première. Il est bien connu que, pour favoriser un tel transfert, il est nécessaire de maximiser le rapport entre la surface de contact entre phases et le volume des phases. Typiquement, cela est obtenu en réalisant une dispersion d'une phase dans l'autre, par exemple dans un bécher à l'aide d'un agitateur magnétique, suivie par une séparation par décantation.

Le document WO 96/12540 divulgue un procédé pour réaliser un transfert de soluté entre deux phases fluides non miscibles à travers une membrane poreuse plane. Le transfert de soluté d'une phase à l'autre s'effectue à travers les pores de la membrane, sans l'aide de laquelle l'interface plane entre les deux fluides serait instable. Les deux phases sont récupérées indépendamment puisque à aucun moment elles ne sont mélangées.

L'article « Analytical Chemistry in a Drop. Solvent Extraction in a Microdrop » de H. Liu et P. Dasgupta, Analytical Chemistry, Volume 68, page1817, 1er juin 1996 divulgue une application analytique de l'extraction liquide-liquide à l'échelle des microlitres. Dans cet article, une gouttelette d'environ 1 µl de chloroforme est suspendue à l'intérieur d'une plus grande goutte d'une solution aqueuse continuellement renouvelée ; un soluté passe de la phase aqueuse à la phase organique et est détecté par spectrométrie laser. Ce procédé ne nécessite que des quantités très faibles de solvants et de substance à analyser, et permet d'obtenir un rapport volume-surface très élevé. Cependant, sa mise en oeuvre est complexe, car elle nécessite un assemblage délicat d'éléments microfluidiques discrets.

Un but de la présente invention est de fournir un procédé d'extraction liquide-fluide à petite échelle (microlitres), principalement pour des applications analytiques. Avantageusement un tel procédé doit permettre de maximiser les échanges entre les deux fluides, tout en étant simple et rapide. Le matériel nécessaire à sa mise en oeuvre doit être simple et économique. Un tel procédé peut constituer une étape d'un procédé microfluidique-chimique plus complexe : par exemple il peut être appliqué à la purification de faibles quantités de réactifs, ou à l'extraction de produits de réaction d'une gouttelette de solvant. Alternativement, il peut être utilisé pour concentrer dans un solvant un soluté présent en traces dans une solution à analyser, de manière à en permettre la détection.

L'idée à la base de la présente invention est de faire circuler une gouttelette (volume de l'ordre du microlitre, voir des dizaines ou centaines de nanolitres) d'une première phase liquide à l'intérieur d'un volume plus important (par exemple compris entre une dizaine de microlitres et quelques millilitres) d'une deuxième phase fluide - liquide ou gazeuse - à l'aide d'un dispositif microfluidique du type « puce fluidique » ; par « dispositif microfluidique » on entend ici un dispositif permettant la manipulation de volumes de liquides inférieurs à 1 millilitre, typiquement compris entre quelques centaines de nanolitres et quelques centaines de microlitres. Des tels dispositifs peuvent être réalisés en grande série à très faible coût grâce à des techniques de fabrication dérivées de la microélectronique, telles que la photolithographie et le dépôt de couches minces. Un ultérieur avantage de cette solution est constitué par le fait que le dispositif de type puce peut comporter des dispositifs d'analyse intégrés.

Un objet de l'invention est donc constitué par un procédé de transfert de matière d'au moins un soluté entre une première phase liquide et une deuxième phase fluide (liquide ou gazeuse), immiscible avec la première, caractérisé en ce qu'il comporte le déplacement, dans un dispositif microfluidique et à l'aide de forces de nature électrique, d'au moins une gouttelette de ladite première phase liquide à l'intérieur d'un espace rempli par ladite deuxième phase fluide. Ladite gouttelette peut comporter typiquement un volume compris entre10 nl et 10 µl et de préférence entre 100 nl et 1 µl.

De préférence, un procédé selon l'invention comporte le déplacement de ladite gouttelette à l'aide desdites forces de nature électrique le long d'une trajectoire entre un point d'injection ou de création de ladite gouttelette dans ledit dispositif microfluidique et une zone d'extraction et/ou d'analyse, ladite trajectoire étant déterminée de telle manière que ladite gouttelette effectue un balayage d'une fraction d'au moins 20%, de préférence d'au moins 50% et d'une manière encore préférée d'au moins 80%, dudit espace rempli par ladite deuxième phase fluide.

Ladite trajectoire peut être une trajectoire pseudo-aléatoire.

Avantageusement ladite deuxième phase fluide s'écoule à l'intérieur dudit espace dudit dispositif microfluidique, sa vitesse étant maintenue à une valeur suffisamment faible pour permettre le déplacement de ladite gouttelette de ladite première phase liquide à l'aide desdites forces de nature électrique.

Selon un mode de réalisation de l'invention, ladite première phase liquide contient initialement un soluté et ladite deuxième phase fluide présente une affinité pour ledit soluté au moins égale à celle de ladite première phase liquide, ce qui entraîne un appauvrissement en soluté de ladite gouttelette (extraction déconcentrante).

Selon un autre mode de réalisation de l'invention, ladite deuxième phase fluide contient initialement un soluté et ladite première phase liquide présente une affinité pour ledit soluté supérieure à celle de ladite deuxième phase fluide, ce qui entraîne un enrichissement en soluté de ladite gouttelette (extraction concentrante).

Dans un mode de réalisation de l'invention, le déplacement de ladite gouttelette de ladite première phase liquide s'effectue par électromouillage en exploitant une différence de conductibilité entre ladite première phase liquide et ladite deuxième phase fluide, lesdites phases étant maintenues dans un espace compris entre une plaque inférieure comportant une matrice d'électrodes et une plaque supérieure, parallèle à ladite plaque inférieure et comportant une contre-électrode faisant face à ladite matrice d'électrodes.

Lorsque ladite première phase liquide présente une conductibilité inférieure à celle de ladite deuxième phase fluide, le déplacement de ladite gouttelette d'une position correspondant à une électrode de départ à une position correspondant à une électrode de destination est obtenu en maintenant ladite électrode de destination au même potentiel que ladite contre-électrode alors qu'une différence de potentiel est établie entre ladite contre-électrode et l'électrode de départ ainsi que les électrodes adjacentes.

Inversement, lorsque ladite première phase liquide présente une conductibilité supérieure à celle de ladite deuxième phase fluide, le déplacement de ladite gouttelette d'une position correspondant à une électrode de départ à une position correspondant à une électrode de destination est obtenu en établissant une différence de potentiel entre ladite électrode de destination et ladite contre-électrode, alors que ladite électrode de départ et les électrodes adjacentes sont maintenues au même potentiel que ladite contre-électrode.

Ladite différence de conductibilité entre ladite première phase liquide et ladite deuxième phase fluide est typiquement d'au moins un facteur 10 et de préférence d'au moins un facteur 100.

Dans un autre mode de réalisation, le déplacement de ladite gouttelette de ladite première phase liquide s'effectue par diélectrophorèse en exploitant une différence de perméabilité électrique entre ladite première phase liquide et ladite deuxième phase fluide. Typiquement ladite différence de perméabilité électrique entre ladite première phase liquide et ladite deuxième phase fluide est d'au moins 10% et de préférence d'au moins 50%.

Un procédé selon l'invention peut comporter une étape de transfert de ladite gouttelette à l'aide desdites forces de nature électrique vers un dispositif d'analyse chimique intégré audit dispositif microfluidique et une étape d'analyse chimique de ladite gouttelette. Ladite étape d'analyse peut comporter une analyse spectrophotométrique de ladite gouttelette, et/ou une étape d'électronébulisation de ladite gouttelette dans un spectromètre de masse.

Un autre objet de l'invention est un dispositif pour la mise en oeuvre d'un tel procédé comportant :
- une plaque inférieure comportant une matrice d'électrodes ;
- une contre-électrode faisant face à ladite matrice d'électrodes ;
- des moyens d'injection ou de création de gouttelettes d'une première phase liquide sur la surface de ladite plaque inférieure ;
- des moyens d'injection sur la surface de ladite plaque inférieure d'une deuxième phase fluide dans laquelle sont immergées les gouttelettes de ladite première phase liquide ; et
- un dispositif de commande pour établir de manière indépendante une différence de potentiel entre chaque électrode de ladite grille et ladite contre-électrode de manière à déterminer un déplacement desdites gouttelettes à l'intérieur du volume de ladite deuxième phase liquide.

Selon des modes de réalisation particuliers :

Le dispositif comporte également des moyens d'analyse chimique desdites gouttelettes.

Le dispositif comporte également des moyens d'évacuation de la deuxième phase liquide de manière à déterminer une circulation de cette dernière sur la surface de ladite plaque inférieure.

Le dispositif comporte également une plaque supérieure, parallèle à ladite plaque inférieure, délimitant avec elle un espace pouvant être rempli par ladite deuxième phase fluide et portant ladite contre-électrode.

Ladite contre-électrode est constituée par au moins un fil conducteur plongé ou tendu dans l'une au moins desdites phases fluides.

Ledit dispositif de commande est prévu pour déterminer un déplacement desdites gouttelettes le long d'une trajectoire leur permettant de balayer au moins 20%, de préférence au moins 50% et d'une manière encore préférée au moins 80% du volume de ladite deuxième phase liquide .

L'invention sera mieux comprise à la lecture de la description suivante, en liaison avec les dessins annexés dans lesquels :
la figure 1 illustre les processus de mélange et de transfert de masse lors de la mise en oeuvre d'un procédé de l'invention ;
les figures 2A et 2B montrent respectivement une vue en coupe latérale et une vue par-dessus d'un dispositif microfluidique convenant à la mise en oeuvre du procédé de l'invention ;
les figures 3A et 3B montrent un procédé élémentaire de déplacement par électromouillage d'une gouttelette de liquide conducteur dans un milieu constitué par un fluide non-conducteur, conformément à un mode de réalisation de la présente invention ;
les figures 4A et 4B montrent un procédé élémentaire de déplacement par électromouillage d'une gouttelette de liquide non-conducteur dans un milieu constitué par un fluide conducteur, conformément à un autre mode de réalisation de la présente invention ;
les figures 5A et 5B montrent des vues par-dessus de deux dispositifs microfluidiques convenant à la mise en oeuvre de deux modes de réalisation particuliers d'un procédé de l'invention ;
la figure 6 illustre schématiquement un procédé de fabrication du dispositif microfluidique des figures 2A et 2B.

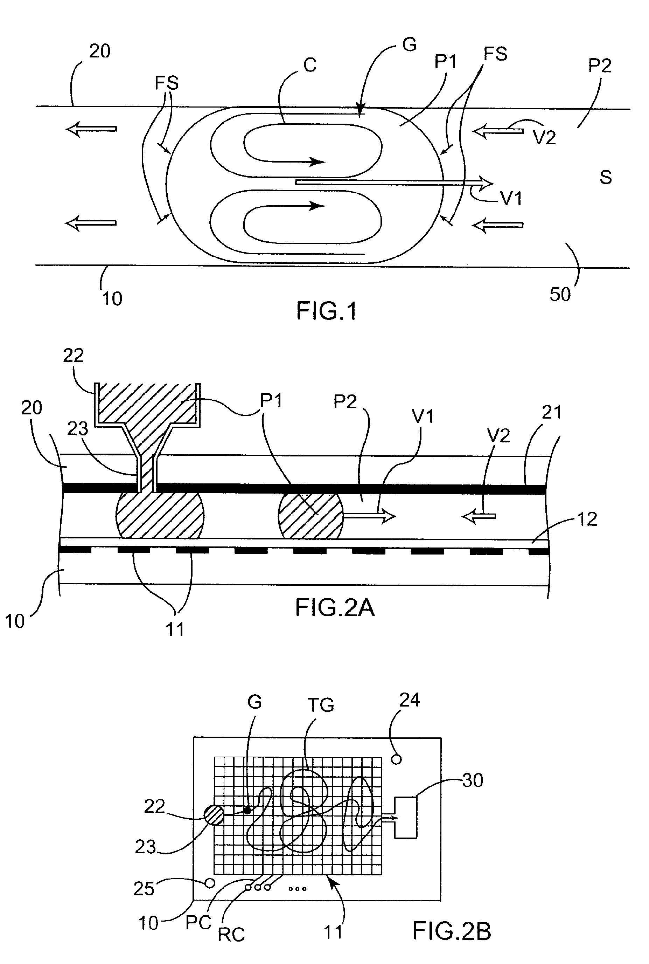

Le principe à la base de l'invention peut être compris à l'aide de la figure 1. Une gouttelette G d'une première phase liquide P1, d'un volume compris par exemple entre 10 nl et 10 µl, de préférence entre 100 nl et 1 µl, est placé dans l'espace 50 compris entre une plaque inférieure 10 et une plaque supérieure 20, immergée dans une deuxième phase fluide P2, immiscible avec elle. Par exemple, la première phase P1 peut être constituée d'un solvant organique, tel que du chloroforme ou du tétrachlorure de carbone, alors que la deuxième phase P2 est une solution aqueuse. La deuxième phase P2 contient initialement un soluté S qui présente une affinité élevée avec la première phase P1 ; le soluté S peut être constitué par des atomes, des ions, des molécules simples ou complexes, des cellules ou des entités biologiques telles que des virus. Ce soluté peut aussi avoir une affinité avec l'un des constituants de la phase P1. Il y a alors formation d'un complexe chimique ou d'un précipité incorporant S dans la phase réceptrice P1. Le soluté S peut aussi être un antigène pour réaliser une réaction antigène/anticorps, par exemple si S est une bactérie. De la même façon, un composé chimique peut être introduit dans la phase P2 pour constituer un ensemble (complexe, précipité, ...) très soluble dans la phase P1 de façon à être transféré facilement dans ladite phase, où il peut résider tel quel ou être de nouveau transformé.

Comme illustré par les flèches FS, un flux de soluté FS se produit à travers l'interface entre les deux phases, de la phase P2 vers la phase P1. Si les deux phases P1 et P2 restent immobiles, le transfert de matière s'effectue uniquement par effet de la diffusion moléculaire, et l'équilibre est atteint très lentement, particulièrement si le volume de l'espace 50 rempli par la deuxième phase P2 est grand par rapport à la gouttelette G. Pour cette raison, le procédé de l'invention comporte le déplacement de ladite gouttelette (flèche V1) de manière à balayer ledit espace 50. Ainsi, lorsque le soluté S a été extrait dans une région du dispositif microfluidique, la gouttelette G quitte la région appauvrie et se déplace vers des zones plus riches en soluté. En outre, le déplacement permet un mélange du contenu de la gouttelette G (tourbillons C sur la figure 1), qui rend homogène sa concentration en soluté S et favorise par conséquent l'extraction. Un tel effet d'homogénéisation induite par le déplacement d'une gouttelette a été décrit par J. R. Burns et C. Ramshaw dans l'article « The intensification of rapid reactions in multiphase systems using slug flow in capillaries », Lab on a chip, 2001, pages 10 - 15, publié sur Internet le 9 août 2001. Cependant, cet article porte sur une situation très différente, dans laquelle la gouttelette est le siège d'une réaction chimique sans aucun transfert de matière vers ou depuis la phase liquide environnante.

Dans ces conditions, on peut considérer que les concentrations de soluté S dans la gouttelette, C₁, et dans la deuxième phase liquide, C₂, sont homogènes, à l'exception de deux films de diffusion, dans lesquels les concentrations varient rapidement. Lorsqu'un état stationnaire est atteint, les concentrations à l'interface valent respectivement, dans l'hypothèse de résistance interfaciale nulle, C₂ⁱ et C₁ⁱ=H·C₂ⁱ, où H est le coefficient de partage du soluté S entre la première et la deuxième phase liquide (H>1 si l'on veut concentrer le soluté dans la gouttelette). La vitesse de transfert du soluté de la phase P2 vers la phase P1 par unité de surface de contact vaut *v* = *K(H·C*_{*2*}*-C*_{*2*}*)* = *K(H-1)C*_{*2*}, ce qui montre que la concentration maximale de soluté dans la gouttelette qui peut être atteinte en principe vaut H·C₂. La conductance globale de transfert K peut être exprimée par *K* = (*H*/*k*_{*2*} + 1/*k*₁)⁻¹ avec *k*_{*i*} = *D*_{*i*}/*e*_{*i*} , *i*=1,2, où *D*_{*i*} est le coefficient de diffusion moléculaire dans la phase i (i=P1, P2) et *e*_{*i*} l'épaisseur du film de diffusion correspondant.

De préférence, la deuxième phase fluide P2 circule à l'intérieur du dispositif microfluidique (flèche V2) de manière à être renouvelée continuellement. Cela permet d'améliorer la cinétique du procédé, car la phase P2 appauvrie en soluté S est continuellement évacuée ; en outre, de cette façon il est possible de mettre en contact un grand volume de phase P2 avec la gouttelette G tout en utilisant un dispositif de petites dimensions. La vitesse V2 de la phase P2 doit être suffisamment faible pour ne pas entraîner la ou les gouttelettes G de la première phase liquide P1 ; la vitesse V2 maximale admissible dépend du cas d'espèce en particulier du mouillage relatif des deux phases P1 et P2 sur leur surface respective et de l'intensité des forces de nature électrique utilisées pour déplacer la gouttelette G. Le débit de la deuxième phase fluide P2 peut être, par exemple, compris entre 10 nl/min et quelques µl/min.

Alternativement, le procédé de l'invention peut être utilisé pour purifier la première phase liquide P1 : dans ce cas (extraction dite « déconcentrante ») la première phase liquide P1 contient initialement le soluté S et la deuxième phase fluide P2 présente une affinité avec ledit soluté S qui est au moins égale à celle de ladite première phase liquide P1, ce qui entraîne un appauvrissement en soluté S de ladite gouttelette G.

Comme illustré sur la figure 2A, un dispositif 22 d'injection de la première phase liquide P1, telle qu'une aiguille reliée à un réservoir, traverse une ouverture 23 pratiquée dans la plaque supérieure 20 et s'ouvre dans l'espace 50 compris entre lesdites plaques supérieure 20 et inférieure 10, espace 50 rempli de la deuxième phase fluide (liquide ou gazeuse) P2. Les gouttelettes G peuvent être formées à l'aide des forces de nature électrique utilisées pour le déplacement : les potentiels des électrodes 11 et de la contre-électrode 21 sont établis de manière à produire une veine liquide qui s'étend à partir de l'aiguille 22, ensuite cette veine est « étranglée » de manière à obtenir la séparation d'une gouttelette. Cette technique est décrite dans de R.B. Fair, V. Srinivasan, H. Ren, P. Paik, V.K. Pamula et M.G. Pollak « Electrowetting-Based On-Chip Sample Processing for Integrated Microfluidics » IEEE International Electron Devices Meeting (IEDM) 2003.

Cette deuxième phase fluide P2 est maintenue en circulation par des dispositifs d'injection (par exemple une seringue) et d'évacuation (un conduit débouchant dans un réservoir) non représentés. Ces derniers sont reliés à l'espace 50 par des capillaires 24, 25 d'un diamètre interne de l'ordre de 100 µm.

Le déplacement des gouttelettes G de la première phase liquide P1 ne peut pas être induit par un différentiel de pression, car cela provoquerait un déplacement simultané des deux phases fluides, ce qui n'est pas souhaité. Il a donc été choisi de déplacer lesdites gouttelettes à l'aide de forces de nature électrique, et en particulier de l'effet connu comme électromouillage. Cet effet est connu, par exemple, de l'article « Reversible Electrowetting and Trapping of Charge : Model and Experiments », de H.J.J. Verheijen et M.V. J. Prins, Langmuir 1999, 15, 6616-6620.

L'article « Electrowetting-based actuation of liquid droplets for microfluidic applications » de M. G. Pollack, R. B. Fair et A. D. Shenderov divulgue le déplacement de gouttelettes d'un liquide conducteur dans un milieu isolant à l'aide de l'électromouillage.

L'actionnement électrique des gouttelettes est permis, dans le cadre de la présente invention, par une grille d'électrodes 11 disposées sur la surface supérieure de la plaque inférieure 10 et par une contre-électrode 21 disposée sur la surface inférieure de la plaque supérieure 20.

En variante, la contre-électrode 21 peut être remplacée par des fils conducteurs plongés ou tendus dans l'une au moins des deux phases fluides. De fils tendus parallèlement à la plaque inférieure 10 et accomplissant une fonction de contre-électrode et de guide pour les gouttelettes G sont connus sous le nom de « micro-caténaires » ; cette technologie est décrite dans l'article de Y. Fouillet, H. Jeanson, D. Dary, O. Constantin et C. Vauchier « Moving droplets with microcatenaries », 7th International Conference on Miniaturized Chemical and Biochemical Analysis Systems », 5 - 9 octobre 2003, Squaw Valley, Californie, Etats-Unis d'Amérique.

Dans le cas du dispositif de la figure 2A, les électrodes 11 sont séparées des phases fluides P1, P2 par un revêtement isolant 12, alors que la contre-électrode 21 est en contact électrique avec elles. En variante, la contre-électrode 21 pourrait, elle aussi, comporter un revêtement isolant. Aussi bien les électrodes 11 que la contre-électrode 21 sont reliées, par des connexions électriques individuelles, à un dispositif de commande qui permet d'établir de manière indépendante une différence de potentiel entre chaque électrode 11 et la contre-électrode correspondante. L'établissement de cette différence de potentiel permet l'actionnement des gouttelettes G, qui peuvent être amenées à suivre une trajectoire précisément déterminée, comme il sera montré plus loin. Dans un souci de clarté de la représentation, lesdites connexions électriques ont été omises des figures.

La vue du dessus de la figure 2B, à travers la plaque supérieure 20 supposée transparente, montre que la grille d'électrodes 11 relie le dispositif d'injection 22 à une zone 30 d'extraction et/ou d'analyse des gouttelettes G. A la périphérie du réseau d'électrode 11, trois reprises de contact RC ont été représentées. En réalité, il existe autant de reprises de contact RC que d'électrodes dans le réseau 11, et chacune d'entre elles est reliée à l'électrode correspondante par une piste conductrice PC. Dans un souci de simplicité, les électrodes du réseau 11 ont, dans la figure, une forme carrée, mais en réalité il est avantageux qu'elles présentent un contour comportant des protubérances de manière à s'imbriquer les unes avec les autres ; il est connu que cela facilite le déplacement des gouttelettes G.

La ligne TG montre un exemple de trajectoire d'une gouttelette G du dispositif d'injection 22 jusqu'à ladite zone d'extraction et/ou d'analyse 30. Cette trajectoire TG est bidimensionnelle et pseudo-aléatoire et permet à la gouttelette G de balayer une grande partie du volume de l'espace 50 rempli de la seconde phase fluide P2 ; de cette manière, elle peut se charger efficacement en soluté S tout en s'affranchissant des temps excessivement longs de la diffusion moléculaire. Dans ce contexte, « une grande partie » signifie une fraction d'au moins 20%, mais de préférence d'au moins 50% et d'une manière encore préférée d'une fraction de l'ordre de 80% ou plus.

Au lieu d'être pseudo-aléatoire, la trajectoire TG peut également avoir un caractère régulier : ce qui est plus important est qu'elle permette effectivement à la gouttelette G de balayer une grande partie de l'espace 50 rempli de la seconde phase fluide P2.

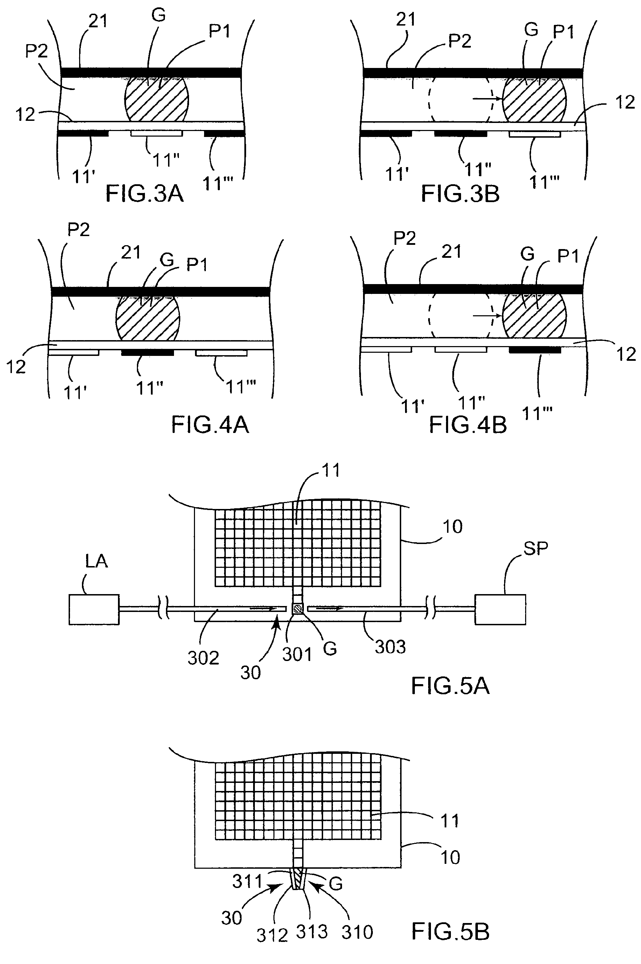

Les figures 3A et 3B illustrent une étape élémentaire de déplacement d'une gouttelette G d'une première phase liquide P1 conductrice immergée dans une deuxième phase fluide P2 sensiblement non-conductrice, c'est à dire ayant une conductibilité au moins 10 fois, et de préférence au moins 100 fois, plus petite que celle de ladite première phase liquide P1. Initialement, comme illustré par la figure 3A, la gouttelette G se trouve positionnée en correspondance d'une électrode 11" qui est maintenue à un potentiel électrique différent de celui de la contre-électrode 21, alors que les électrodes 11', 11''' avoisinantes sont maintenues, elles, au même potentiel que cette dernière ; dans cette figure et dans la suivante le ou les électrodes « actives », présentant une différence de potentiel par rapport à la contre-électrode 21 sont représentées en blanc, alors que les électrodes au même potentiel que la contre-électrode sont représentés en noir. On comprend facilement, sur la base des lois de l'électrostatique, que la gouttelette G se trouve dans une situation d'équilibre stable. Si on désire déplacer ladite gouttelette vers l'électrode 11''', il suffit d'appliquer une différence de potentiel entre cette dernière et la contre-électrode 21, alors que l'électrode de départ 11" est ramenée au même potentiel que ladite contre-électrode 21. Les différences de potentiel en question sont typiquement comprises entre 10 V et quelques centaines de Volts. Dans ces conditions, des vitesses de déplacement des gouttelettes de l'ordre de quelques centimètres par seconde peuvent être atteintes.

Ce procédé exploite le phénomène connu sous le nom d'électromouillage, qui nécessite une différence significative de conductibilité entre les deux phases P1, P2. Le même effet est obtenu par diélectrophorèse lorsque lesdites phases sont toutes deux sensiblement isolantes, et que la première phase liquide P1 présente une polarisabilité électrique sensiblement supérieure à celle de la deuxième phase fluide P2 (par exemple, supérieure d'au moins 10%, de préférence d'au moins 50%). Le déplacement de gouttelettes par diélectrophorèse est décrit, par exemple, dans l'article de J. Vykoukal, J. A. Schwartz, F. F. Becker et P. R. C. Gascoyne « A Programmable Dielectrophoretic Fluid Processor for Droplet-Based Chemistry », Micro Total Analysis Systems 2001, pages 72 - 74, Kluwer Academic Publishing.

Lorsque c'est la deuxième phase fluide P2 qui est électriquement conductrice, alors que la première phase liquide est sensiblement non-conductrice, il est possible de procéder comme illustré par les figures 4A et 4B. Initialement, la gouttelette G se trouve positionnée en correspondance d'une électrode 11" qui est maintenue au même potentiel électrique que la contre-électrode 21, alors que les électrodes 11', 11''' avoisinantes présentent une différence de potentiel par rapport à cette dernière. Comme dans le cas précédent, la gouttelette G se trouve dans une situation d'équilibre stable. Si on désire déplacer ladite gouttelette vers l'électrode 11''', il suffit de ramener cette dernière au même potentiel de la contre-électrode 21, alors qu'une différence de potentiel est établie entre ladite contre-électrode 21 et l'électrode de départ 11 ".

Le même effet est obtenu par diélectrophorèse lorsque lesdites phases sont toutes deux sensiblement isolantes, et que la deuxième phase fluide P2 présente une polarisabilité électrique sensiblement supérieure à celle de la première phase liquide P1 (par exemple, supérieure d'au moins 10%, de préférence d'au moins 50%).

Dans les cas illustrés par les figures 3A à 4B la contre-électrode 21 est en contact électrique avec les phases P1 et P2, alors que les électrodes de la grille 11 sont séparées de ces dernières par une couche isolante 12, constituée de préférence d'un matériau non-mouillable par la première phase liquide P1 et présentant une haute constante diélectrique tel que, par exemple, du SiO₂ ou du PTFA .

L'homme du métier comprendra que des résultats similaires peuvent également être obtenus en utilisant une contre-électrode qui serait, elle aussi, isolée.

L'utilisation de différences de potentiel constantes a été considérée, mais l'homme du métier comprendra que l'application de signaux alternés, par exemple sinusoïdaux, aux électrodes 11', 11" et 11''' peut permettre d'atteindre les mêmes résultats. Typiquement seront utilisées des fréquences de quelques dizaines de Hertz à quelques kHz en électromouillage et de 100 kHz à 10MHz en diélectrophorèse.

Un procédé de transfert de matière selon l'invention peut être appliqué avantageusement à des analyses chimiques à très petite échelle. Dans ce cas, la deuxième phase fluide P2 peut être constituée par une solution aqueuse susceptible de contenir des polluants chimiques ou nucléaires et la première phase liquide P1 consister en un solvant organique présentant une grande affinité pour lesdits polluants. Les gouttelettes G peuvent se charger desdits polluants de manière à en permettre une détection aisée. Par exemple, il est possible d'utiliser en tant que phase P1 des gouttes de chloroforme d'un volume de l'ordre d'1 µl (conductibilité du chloroforme : σ_{ch}= 0,4·10⁻¹¹ mS cm⁻¹) et en tant que phase P2 un bain d'un volume de 100 µl à quelques ml d'eau du robinet contenant en solution des cations métalliques Pb²⁺ à une concentration de 10 à 100 mg/l (conductibilité : 0,3 < σ_{H2O} < 1 mS cm⁻¹). Les microgouttes de chloroforme peuvent être déplacées dans le bain par électromouillage en utilisant une différence de potentiel de 100V environ à une fréquence de 3 kHz. La différence de potentiel peut avantageusement être appliquée en utilisant, à la place de la contre-électrode 21, un fil conducteur qui plonge dans le fluide, réalisant ainsi un bain « à ciel ouvert ». La détection des ions Pb²⁺ concentrés dans les microgouttes de chloroforme peut se faire par spectrophotométrie ou colorimétrie à l'aide de ditizone (Dzz) soluble dans le chloroforme, grâce à la réaction 2 Dzz+Pb ⇒ Pb(Dzz)₂.

Il est également possible d'injecter successivement dans le dispositif des gouttelettes G de solvants différents, présentant une différente affinité avec les solutés éventuellement présents dans la phase P2. Par conséquent, il est particulièrement avantageux que des moyens d'analyse chimique soient intégrés au dispositif microfluidique utilisé pour la mise en oeuvre du procédé de transfert de matière.

La figure 5A montre, par exemple, une vue partielle d'un dispositif du même type de celui représenté sur la figure 2B, dans lequel la zone d'analyse 30 comporte une partie de positionnement 301 d'une gouttelette G ainsi qu'une première et une deuxième fibre optique 302, 303, alignées entre elles et présentant des extrémités qui se font face d'un côté et d'autre de ladite partie de positionnement 301. La première fibre optique 302 est destinée à être reliée à une source de rayonnement optique, par exemple un laser LA, pour éclairer une gouttelette G amenée dans la partie de positionnement 301 à l'aide des méthodes électriques décrites ci-dessus en référence aux figures 3A à 4B. La deuxième fibre optique 303 est destinée à être reliée à un spectrophotomètre SP pour recueillir et analyser le rayonnement optique transmis à travers ladite gouttelette G et/ou le rayonnement de fluorescence émis par ladite gouttelette. Il est donc possible d'effectuer une analyse du soluté contenu dans ladite gouttelette G par des méthodes spectrophotométriques. Eventuellement, les fibres optiques 302 et 303 peuvent être remplacées par des guides d'onde diélectriques planaires.

Alternativement, comme illustré sur la figure 5B, la zone 30 peut être constituée par un « bec » d'électronébulisation 310 constitué par une pointe dépassant du bord des plaques 10 et 20 et présentant une fente 311 délimitée par deux électrodes 312 et 313, de préférence de forme allongée et convergentes. Une gouttelette G, une fois amenée jusqu'au « bec » 310 se transforme en une veine liquide qui remplit la fente 311. En appliquant une différence de potentiel de l'ordre de 2 kV entre les électrodes 312, 313 et une contre-électrode externe, il est possible de nébuliser ladite veine liquide sous la forme d'un gaz d'ions ou d'un nuage de gouttelettes électriquement chargées. Si le « bec » 310 est disposé à l'entrée d'un spectromètre de masse, une analyse par spectrométrie de masse de la première phase liquide P1 et du soluté S y contenu peut être obtenue.

Il est également possible de combiner plusieurs dispositifs d'analyse sur la même « puce » : par exemple, on peut concevoir un dispositif dans lequel une gouttelette G serait d'abord amenée vers une zone d'analyse par spectrophotométrie pour être ensuite électronébulisée dans un spectromètre de masse.

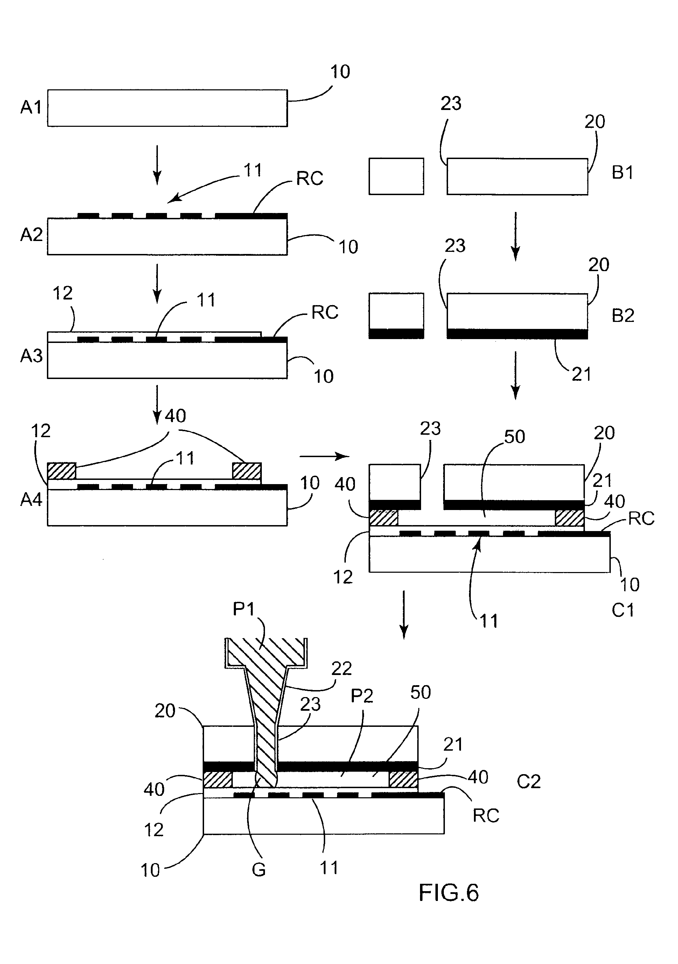

La figure 6 illustre schématiquement un procédé de fabrication d'un dispositif de mise en oeuvre d'un procédé de l'invention. Les étapes A1 - A4 se réfèrent à la réalisation de la plaque inférieure 10, les étapes B1 - B2 à celle de la plaque supérieure 20 et les étapes C1 - C2 à l'assemblage des deux. Ce procédé de fabrication utilise des techniques issues de la microélectronique et utilisés communément dans le domaine de la microfluidique.

Pour la réalisation de la plaque inférieure 10 on part d'un substrat typiquement en verre « pyrex » ou en silicium oxydé d'une épaisseur de l'ordre de 500 µm (A1) sur lequel est réalisé par photolithographie un réseau 11 d'électrodes, de préférence en or (A2), en utilisant une couche d'accrochage en titane. En même temps sont réalisées les pistes conductrices PC (non représentées) qui relient chaque électrode à l'une des reprises de contact RC disposées dans la partie périphérique de la plaque 10. A l'étape A3, une couche d'isolement 12 est déposée sur lesdites électrodes : par exemple, ladite couche 12 peut être constituée de SiO₂ et être déposée à l'aide de la technique connue comme PECVD (dépôt chimique en phase vapeur assistée par plasma). Une étape de photolithographie permet de dégager les reprises de contact, destinées à permettre la connexion électrique du dispositif microfluidique avec des circuits extérieurs. Ensuite (A4) des murs 40 en résine épaisse (SU-8, par exemple) de 50 - 300 µm de hauteur et épaisseur sont réalisés autour du réseau d'électrodes 11 pour délimiter l'espace 50 destiné à contenir la deuxième phase liquide P2 ; le volume de cet espace est de l'ordre de 10 à 100 µl. Les murs 40 n'ont pas été représentés sur les figures 2B, 5A et 5B afin de ne pas les surcharger. La plaque supérieure 20 est réalisée à partir d'un substrat en verre « pyrex » ou en matière plastique (polycarbonate, par exemple), dans laquelle est pratiquée une ouverture 23 pour permettre l'insertion d'un dispositif 22 d'injection de la première phase liquide P1 (étape B1) ; ensuite (phase B2) une contre-électrode 21 est réalisée par photolithographie. De préférence, ladite contre-électrode sera réalisée en ITO (oxyde d'indium et étain), qui présente l'avantage d'être transparent et de permettre ainsi l'observation du déroulement du procédé de l'invention. Eventuellement il est possible de déposer une couche isolante sur la contre-électrode, comme cela a été fait pour la plaque inférieure 10. L'assemblage des deux plaques (étape C1) s'effectue par sérigraphie de colle effectuée sur lesdits murs en résine épaisse ; la sérigraphie de colle est une technique qui permet l'étalement d'une couche de colle très fine (1 - 10 µm) et homogène. Une colle adaptée est la colle DELO-KATIOBOND 45952 fournie par la société SUPRATEC. La sérigraphie de colle est décrite par exemple dans le document WO 00/77509. Ensuite, étape C2, un dispositif 22 d'injection de la première phase liquide P1 est inséré dans l'ouverture pratiquée dans la plaque supérieure 20, et les capillaires 23, 24 (non représentés) débouchant dans l'espace 50 et permettant l'amenée et l'évacuation de la deuxième phase liquide P2.

Avant ou après assemblage, les surfaces internes du dispositif ou une partie d'entre elles peuvent être traitées par dépôt d'un matériau non-mouillant par au moins la première phase liquide P1, destiné à favoriser le déplacement des gouttelettes G. Le matériau peut par exemple être du silane hydrophobe, déposé en phase vapeur, ou du téflon, déposé en phase liquide.

Le dispositif complet présente une surface totale de quelques centimètres carrés et une épaisseur de quelques millimètres. Il peut être supporté par un circuit imprimé, dont les pistes conductrices peuvent être connectées électriquement aux reprises de contact RC par l'intermédiaire de fils en or (technique dite du « wire bonding »). Alternativement, la connexion électrique pourra être assurée par des pointes de test, de dimensions de l'ordre de quelques centaines de micromètres, montées sur ressorts. Des telles pointes de test sont commercialisées par la société FM Contact Technologies sous le nom de « pointes de test Feinmetall ». A son tour, le circuit de support peut être enfiché dans un circuit plus complexe dans lequel s'insèrent des câbles coaxiaux d'alimentation. Le déplacement des gouttelettes G peut être piloté par un logiciel réalisé ad hoc, par exemple en utilisant le langage « Labview », de la société National Instruments.

## Revendications

1. Procédé de transfert de matière d'au moins un soluté (S) entre une première phase liquide (P1) et une deuxième phase fluide (P2), immiscible avec la première, **caractérisé en ce qu'**il comporte le déplacement, dans un dispositif microfluidique et à l'aide de forces de nature électrique, d'au moins une gouttelette (G) de ladite première phase liquide (P1) à l'intérieur d'un espace (50) rempli par ladite deuxième phase fluide (P2).

2. Procédé selon la revendication 1 comportant le déplacement de ladite gouttelette (G) à l'aide desdites forces de nature électrique le long d'une trajectoire (TG) bidimensionnelle entre un point d'injection (22) ou de création de ladite gouttelette (G) dans ledit dispositif microfluidique et une zone d'extraction et/ou d'analyse (30), ladite trajectoire (TG) étant déterminée de telle manière que ladite gouttelette (G) effectue un balayage d'une fraction d'au moins 20%, de préférence d'au moins 50% et d'une manière encore préférée d'au moins 80%, dudit espace (50) rempli par ladite deuxième phase fluide (P2).

3. Procédé selon la revendication 2 dans lequel ladite trajectoire (TG) est une trajectoire pseudo-aléatoire.

4. Procédé selon l'une des revendications précédentes dans lequel ladite deuxième phase fluide (P2) s'écoule à l'intérieur dudit espace (50) dudit dispositif microfluidique, sa vitesse (V2) étant maintenue à une valeur suffisamment faible pour permettre le déplacement de ladite gouttelette (G) de ladite première phase liquide (P1) à l'aide desdites forces de nature électrique.

5. Procédé selon l'une des revendications précédentes, dans lequel ladite première phase liquide (P1) contient initialement un soluté (S) et ladite deuxième phase fluide (P2) présente une affinité pour ledit soluté (S) au moins égale à celle de ladite première phase liquide (P1), ce qui entraîne un appauvrissement en soluté (S) de ladite gouttelette (G).

6. Procédé selon l'une des revendications 1 à 4 dans lequel ladite deuxième phase fluide (P2) contient initialement un soluté (S) et ladite première phase liquide (P1) présente une affinité pour ledit soluté (S) supérieure à celle de ladite deuxième phase fluide (P2), ce qui entraîne un enrichissement en soluté (S) de ladite gouttelette (G).

7. Procédé selon l'une des revendications précédentes dans lequel le déplacement de ladite gouttelette (G) de ladite première phase liquide s'effectue par électromouillage en exploitant une différence de conductibilité entre ladite première phase liquide (P1) et ladite deuxième phase fluide (P2), lesdites phases (P1, P2) étant maintenues en contact avec une matrice d'électrodes (11) et une contre-électrode (21) entre lesquelles peut être établie une différence de potentiel.

8. Procédé selon la revendication 7 dans lequel ladite première phase liquide (P1) présente une conductibilité inférieure à celle de ladite deuxième phase fluide (P2) et dans lequel le déplacement de ladite gouttelette (G) d'une position correspondante à une électrode de départ (11") à une position correspondante à une électrode de destination (11''') est obtenu en maintenant ladite électrode de destination (11''') au même potentiel que ladite contre-électrode (21) alors qu'une différence de potentiel est établie entre ladite contre-électrode (21) et l'électrode de départ (11") ainsi que les électrodes adjacentes (11').

9. Procédé selon la revendication 7 dans lequel ladite première phase liquide (P1) présente une conductibilité supérieure à celle de ladite deuxième phase fluide (P2) et dans lequel le déplacement de ladite gouttelette (G) d'une position correspondante à une électrode de départ (11") à une position correspondante à une électrode de destination (11''') est obtenu en établissant une différence de potentiel entre ladite électrode de destination (11''') et ladite contre-électrode (21), alors que ladite électrode de départ (11") et les électrodes adjacentes (11') sont maintenues au même potentiel que ladite contre-électrode (21).

10. Procédé selon l'une des revendications 8 ou 9 dans lequel ladite différence de conductibilité entre ladite première phase liquide (P1) et ladite deuxième phase fluide (P2) est d'au moins d'un facteur 10 et de préférence d'au moins un facteur 100.

11. Procédé selon l'une des revendications 1 à 6 dans lequel le déplacement de ladite gouttelette (G) de ladite première phase liquide (P1) s'effectue par diélectrophorèse en exploitant une différence de perméabilité électrique entre ladite première phase liquide (P1) et ladite deuxième phase fluide (P2), lesdites phases (P1, P2) étant maintenues en contact avec une matrice d'électrodes (11) et une contre-électrode (21) entre lesquelles peut être établie une différence de potentiel.

12. Procédé selon la revendication 11 dans lequel ladite différence de perméabilité électrique entre ladite première phase liquide (P1) et ladite deuxième phase fluide (P2) est d'au moins 10% et de préférence d'au moins 50%.

13. Procédé selon l'une des revendications précédentes comportant une étape de transfert de ladite gouttelette (G) à l'aide desdites forces de nature électrique vers un dispositif d'analyse chimique (30) intégré audit dispositif microfluidique et une étape d'analyse chimique de ladite gouttelette.

14. Procédé selon la revendication 13 dans lequel ladite étape d'analyse comporte une analyse spectrophotométrique de ladite gouttelette.

15. Procédé selon la revendication 13 dans lequel ladite étape d'analyse comporte une étape d'électronébulisation de ladite gouttelette dans un spectromètre de masse.

16. Procédé selon l'une des revendications précédentes dans lequel ladite gouttelette (G) de ladite première phase liquide a un volume compris entre10 nl et 10 µl et de préférence entre 100 nl et 1 µl.

17. Dispositif pour la mise en oeuvre du procédé selon l'une des revendications 1 à 16 comportant :
- une plaque inférieure (10) comportant une matrice d'électrodes (11) ;
- une contre-électrode (21) faisant face à ladite matrice d'électrodes (21) ;
- des moyens d'injection (22) ou de création de gouttelettes (G) d'une première phase liquide (P1) sur la surface de ladite plaque inférieure (10);
- des moyens d'injection (24) sur la surface de ladite plaque inférieure (10) d'une deuxième phase fluide (P2) dans laquelle sont immergées les gouttelettes (G) de ladite première phase liquide (P1) ; et
- un dispositif de commande pour établir de manière indépendante une différence de potentiel entre chaque électrode de ladite grille (11) et ladite contre-électrode (21) de manière à déterminer un déplacement desdites gouttelettes (G) à l'intérieur du volume de ladite deuxième phase liquide (P2).

18. Dispositif selon la revendication 17 comportant également des moyens d'analyse chimique (30) desdites gouttelettes (G).

19. Dispositif selon l'une des revendications 17 ou 18 comportant également des moyens d'évacuation (25) de la deuxième phase liquide (P2) de manière à déterminer une circulation de cette dernière sur la surface de ladite plaque inférieure (10).

20. Dispositif selon l'une des revendications 17 à 19 comportant également une plaque supérieure (20), parallèle à ladite plaque inférieure (10), délimitant avec elle un espace (50) pouvant être rempli par ladite deuxième phase fluide (P2) et portant ladite contre-électrode (21).

21. Dispositif selon l'une des revendications 17 à 19 dans lequel ladite contre-électrode est constituée par au moins un fil conducteur plongé ou tendu dans l'une au moins desdites phases fluides (P1, P2).

22. Dispositif selon l'une des revendications 17 à 21 dans lequel ledit dispositif de commande est prévu pour déterminer un déplacement desdites gouttelettes (G) le long d'une trajectoire (TG) leur permettant de balayer au moins 20%, de préférence au moins 50% et d'une manière encore préférée au moins 80% du volume de ladite deuxième phase liquide (P2).

## Revendications modifiées

### Revendications modifiées conformément à la règle 86(2) CBE.

**1.** Procédé de transfert de matière d'au moins un soluté (S) entre une première phase liquide (P1) et une deuxième phase fluide (P2), immiscible avec la première, **caractérisé en ce qu'**il comporte le déplacement dans un dispositif microfluidique d'au moins une gouttelette (G) de ladite première phase liquide (P1) à l'intérieur d'un espace (50) rempli par ladite deuxième phase fluide (P2), ledit déplacement étant effectué par l'application d'une force de nature électrique.

**2.** Procédé selon la revendication 1 comportant le déplacement de ladite gouttelette (G) à l'aide desdites forces de nature électrique le long d'une trajectoire (TG) bidimensionnelle entre un point d'injection (22) ou de création de ladite gouttelette (G) dans ledit dispositif microfluidique et une zone d'extraction et/ou d'analyse (30), ladite trajectoire (TG) étant déterminée de telle manière que ladite gouttelette (G) effectue un balayage d'une fraction d'au moins 20%, de préférence d'au moins 50% et d'une manière encore préférée d'au moins 80%, dudit espace (50) rempli par ladite deuxième phase fluide (P2).

**3.** Procédé selon la revendication 2 dans lequel ladite trajectoire (TG) est une trajectoire pseudo-aléatoire.

**4.** Procédé selon l'une des revendications précédentes dans lequel ladite deuxième phase fluide (P2) s'écoule à l'intérieur dudit espace (50) dudit dispositif microfluidique, sa vitesse (V2) étant maintenue à une valeur suffisamment faible pour permettre le déplacement de ladite gouttelette (G) de ladite première phase liquide (P1) à l'aide desdites forces de nature électrique.

**5.** Procédé selon l'une des revendications précédentes, dans lequel ladite première phase liquide (P1) contient initialement un soluté (S) et ladite deuxième phase fluide (P2) présente une affinité pour ledit soluté (S) au moins égale à celle de ladite première phase liquide (P1), ce qui entraîne un appauvrissement en soluté (S) de ladite gouttelette (G).

**6.** Procédé selon l'une des revendications 1 à 4 dans lequel ladite deuxième phase fluide (P2) contient initialement un soluté (S) et ladite première phase liquide (P1) présente une affinité pour ledit soluté (S) supérieure à celle de ladite deuxième phase fluide (P2), ce qui entraîne un enrichissement en soluté (S) de ladite gouttelette (G).

**7.** Procédé selon l'une des revendications précédentes dans lequel le déplacement de ladite gouttelette (G) de ladite première phase liquide s'effectue par électromouillage en exploitant une différence de conductibilité entre ladite première phase liquide (P1) et ladite deuxième phase fluide (P2), lesdites phases (P1, P2) étant maintenues en contact avec une matrice d'électrodes (11) et une contre-électrode (21) entre lesquelles peut être établie une différence de potentiel.

**8.** Procédé selon la revendication 7 dans lequel ladite première phase liquide (P1) présente une conductibilité inférieure à celle de ladite deuxième phase fluide (P2) et dans lequel le déplacement de ladite gouttelette (G) d'une position correspondante à une électrode de départ (11") à une position correspondante à une électrode de destination (11"') est obtenu en maintenant ladite électrode de destination (11"') au même potentiel que ladite contre-électrode (21) alors qu'une différence de potentiel est établie entre ladite contre-électrode (21) et l'électrode de départ (11") ainsi que les électrodes adjacentes (11').

**9.** Procédé selon la revendication 7 dans lequel ladite première phase liquide (P1) présente une conductibilité supérieure à celle de ladite deuxième phase fluide (P2) et dans lequel le déplacement de ladite gouttelette (G) d'une position correspondante à une électrode de départ (11") à une position correspondante à une électrode de destination (11'") est obtenu en établissant une différence de potentiel entre ladite électrode de destination (11'") et ladite contre-électrode (21), alors que ladite électrode de départ (11") et les électrodes adjacentes (11') sont maintenues au même potentiel que ladite contre-électrode (21).

**10.** Procédé selon l'une des revendications 8 ou 9 dans lequel ladite différence de conductibilité entre ladite première phase liquide (P1) et ladite deuxième phase fluide (P2) est d'au moins d'un facteur 10 et de préférence d'au moins un facteur 100.

**11.** Procédé selon l'une des revendications 1 à 6 dans lequel le déplacement de ladite gouttelette (G) de ladite première phase liquide (P1) s'effectue par diélectrophorèse en exploitant une différence de perméabilité électrique entre ladite première phase liquide (P1) et ladite deuxième phase fluide (P2), lesdites phases (P1, P2) étant maintenues en contact avec une matrice d'électrodes (11) et une contre-électrode (21) entre lesquelles peut être établie une différence de potentiel.

**12.** Procédé selon la revendication 11 dans lequel ladite différence de perméabilité électrique entre ladite première phase liquide (P1) et ladite deuxième phase fluide (P2) est d'au moins 10% et de préférence d'au moins 50%.

**13.** Procédé selon l'une des revendications précédentes comportant une étape de transfert de ladite gouttelette (G) à l'aide desdites forces de nature électrique vers un dispositif d'analyse chimique (30) intégré audit dispositif microfluidique et une étape d'analyse chimique de ladite gouttelette.

**14.** Procédé selon la revendication 13 dans lequel ladite étape d'analyse comporte une analyse spectrophotométrique de ladite gouttelette.

**15.** Procédé selon la revendication 13 dans lequel ladite étape d'analyse comporte une étape d'électronébulisation de ladite gouttelette dans un spectromètre de masse.

**16.** Procédé selon l'une des revendications précédentes dans lequel ladite gouttelette (G) de ladite première phase liquide a un volume compris entre 10 nl et 10 µl et de préférence entre 100 nl et 1 µl.

**17.** Dispositif pour la mise en oeuvre du procédé selon l'une des revendications 1 à 16 comportant :
- une plaque inférieure (10) comportant une matrice d'électrodes (11) ;
- une contre-électrode (21) faisant face à ladite matrice d'électrodes (21) ;
- des moyens d'injection (22) ou de création de gouttelettes (G) d'une première phase liquide (P1) sur la surface de ladite plaque inférieure (10);
- des moyens d'injection (24) sur la surface de ladite plaque inférieure (10) d'une deuxième phase fluide (P2) dans laquelle sont immergées les gouttelettes (G) de ladite première phase liquide (P1) ; et
- un dispositif de commande pour établir de manière indépendante une différence de potentiel entre chaque électrode de ladite grille (11) et ladite contre-électrode (21) de manière à déterminer un déplacement desdites gouttelettes (G) à l'intérieur du volume de ladite deuxième phase liquide (P2).

**18.** Dispositif selon la revendication 17 comportant également des moyens d'analyse chimique (30) desdites gouttelettes (G).

**19.** Dispositif selon l'une des revendications 17 ou 18 comportant également des moyens d'évacuation (25) de la deuxième phase liquide (P2) distincts desdits moyens d'injections (22) de manière à déterminer une circulation de cette dernière sur la surface de ladite plaque inférieure (10).

**20.** Dispositif selon l'une des revendications 17 à 19 comportant également une plaque supérieure (20), parallèle à ladite plaque inférieure (10), délimitant avec elle un espace (50) pouvant être rempli par ladite deuxième phase fluide (P2) et portant ladite contre-électrode (21).

**21.** Dispositif selon l'une des revendications 17 à 19 dans lequel ladite contre-électrode est constituée par au moins un fil conducteur plongé ou tendu dans l'une au moins desdites phases fluides (P1, P2).

**22.** Dispositif selon l'une des revendications 17 à 21 dans lequel ledit dispositif de commande est prévu pour déterminer un déplacement desdites gouttelettes (G) le long d'une trajectoire (TG) leur permettant de balayer au moins 20%, de préférence au moins 50% et d'une manière encore préférée au moins 80% du volume de ladite deuxième phase liquide (P2).
